# FASCICULE DE BREVET EUROPEEN

(11) **EP 0 626 746 B1**
(45) Date de publication et mention de la délivrance du brevet: **24.06.1998**
(21) Numéro de dépôt: 94401127.9
(22) Date de dépôt: 20.05.1994
(51) Int. Cl.: H02J 7/10

(54) **Procédé de contrôle de la charge d'accumulateurs étanches au nickel et chargeur utilisant ce procédé**
Ladekontrollverfahren und Ladegerät für eine gasdichten Nickel-Akkumulator
Charge control method of a sealed nickel storage cell and charger therefor

(30) Priorité: 24.05.1993 FR 9306155
(43) Date de publication de la demande: 30.11.1994
(73) Titulaire: ALCATEL ALSTHOM COMPAGNIE GENERALE D'ELECTRICITE, 75008 Paris (FR)
(72) Inventeur: Cuesta, Rosendo, F-33450 Saint Loubes (FR); Rouverand, Christophe, F-92110 Clichy (FR)
(74) Mandataire: Laroche, Danièle

(56) Documents cités:
- EP-A- 0 473 514
- EP-A- 0 498 715
- WO-A-89/02182
- WO-A-92/11680
- WO-A-92/15142
- ELECTRONIQUE RADIO PLANS, no. 543, février 1993, Paris FR, pages 57-64; P. GUEULLE : "Les circuits intégrés pour chargeurs rapides"
- ELEKTRONIK, vol. 42, no. 6, 23 mars 1993, Munich DE, pages 74-77; M. BULLINGER : 'Schnelladen mit Intelligenz - Ein IC steuert NiCd- und NiMH-Akkuladegeräte'

## Description

La présente invention concerne un procédé de contrôle de la charge d'accumulateurs étanches au nickel, ceux-ci étant généralement montés en batterie. Il s'agit en particulier de batteries destinées aux applications portables comme les caméras vidéo, les rasoirs, etc...

A ce jour, les accumulateurs étanches au nickel les plus répandus sont basés sur le couple nickel-cadmium Ni-Cd. Leur charge complète à régime élevé s'effectue en deux phases. Une première phase de charge correspond à l'oxydoréduction des matières actives des électrodes. Lorsque toute la matière active de l'électrode positive a été transformée, l'accumulateur entre dans une phase de surcharge. Durant cette seconde phase, il se produit un dégagement d'oxygène sur l'électrode positive. La recombinaison de l'oxygène à l'électrode négative conduit à une élévation de la température qui a pour effet secondaire la baisse de la tension de l'accumulateur.

Habituellement, pour s'assurer que l'accumulateur est complètement chargé, on contrôle l'évolution de sa tension ou de sa température, et la charge est interrompue dès que la variation de tension devient négative ou que la température augmente pour atteindre une valeur prédéterminée (WO-A-92/11 680).

Le document WO-A-92/15142 décrit un procédé de charge et un chargeur pour différents types d'accumulateurs qui utilise des courbes mémorisées d'évolution d'un paramètre de charge, tel que la tension, le courant de charge ou la température de l'accumulateur, pour rapprocher l'évolution du paramètre de charge d'une évolution idéale et pour déterminer l'instant optimal d'arrêt de la charge. Pour ce faire, le paramètre de charge est mesuré au cours de la charge et son évolution comparée avec des courbes idéales de référence mémorisées. Une courbe ayant des caractéristiques intitiales similaires est ensuite séléctionnée et utilisée pour contrôler la suite de la charge.

Depuis peu de nouveaux accumulateurs étanches basés sur le couple nickel-hydrure Ni-MH ont fait leur apparition sur le marché. Dans de nombreuses applications ils sont destinés à se substituer aux accumulateurs Ni-Cd. L'interchangeabilité des batteries comportant l'un ou l'autre type d'accumulateur et l'utilisation d'un chargeur unique est donc primordiale.

Mais le comportement de cet accumulateur au cours d'une charge rapide diffère de celui du Ni-Cd en particulier sur deux points:
- la phase de charge est exothermique ce qui se traduit par un échauffement continu de l'accumulateur dès le début de la charge,
- l'amplitude de la variation négative de tension au passage à la phase de surcharge est beaucoup moins marquée.

Par ailleurs, les connaissances actuelles montrent qu'il existe une relation directe entre le cumul de capacité surchargée et la durée de vie de l'accumulateur Ni-MH. La parfaite maîtrise de sa charge et la limitation au minimum de la durée de la phase de surcharge sont donc indispensables pour obtenir les meilleures performances en durée de vie.

Les méthodes de détection de fin de charge appliquées aux accumulateurs Ni-Cd s'avèrent particulièrement délicates à maîtriser dans le cas des accumulateurs Ni-MH en raison de la faible variation des signaux observée.

La présente invention concerne en particulier un procédé permettant d'effectuer une charge rapide des accumulateurs étanches au nickel de type nickel-cadmium et nickel-hydrure, dans les meilleures conditions de fiabilité et de respect des spécificités techniques de chaque produit. En outre, ce procédé autorise la réalisation de chargeurs utilisables pour les batteries comportant l'un ou l'autre type d'accumulateur.

L'objet de la présente invention est un procédé de contrôle de la charge rapide d'accumulateurs étanches au nickel de type nickel-hydrure et nickel-cadmium, éventuellement associés en batterie, lesdits accumulateurs ayant été identifiés, comportant les étapes suivantes pour déterminer la fin de la charge:
- une loi d'échauffement desdits accumulateurs en fonction du temps de charge avant la phase de surcharge pour un mode de charge donné est précédemment déterminée et mémorisée,
- la température desdits accumulateurs est mesurée,
- une température de référence est calculée en fonction du temps de charge déjà écoulé suivant ladite loi d'échauffement,
- la charge desdits accumulateurs est arrêtée lorsque la différence entre ladite température des accumulateurs et ladite température de référence est supérieure à une valeur prédéterminée.

La charge des accumulateurs peut être réalisée à courant constant ou bien avec un courant variable dans le temps. La durée de la charge complète est comprise entre 30 minutes et 2 heures.

La loi d'échauffement est déterminée de la manière suivante:
- l'évolution de la température des accumulateurs au cours d'une charge est mesurée et enregistrée,
- l'expression mathématique de variation de la température en fonction du temps de charge est établie,
- la loi d'échauffement des accumulateurs pendant la charge est mémorisée.

Pendant la charge, les températures sont mesurées successivement à un intervalle de temps choisi. Ces valeurs permettent d'en déduire la loi de variation de la température en fonction du temps. Cette loi dépend principalement du mode de charge (courant constant,...), des conditions de la charge (courant de charge,...), et du modèle de batterie (format des accumulateurs, type de montage en batterie,...).

Par exemple lorsque le courant est constant, la température d'un accumulateur Ni-MH varie linéairement avec le temps suivant une loi d'échauffement de la forme: θ(t) = θₒ + f(t) où θₒ est la température de l'accumulateur au commencement de la charge et f(t) représente l'augmentation de température avec le temps durant la phase de charge. Habituellement la loi d'échauffement défini pour un accumulateur Ni-MH devient θ(t) = θₒ pour un accumulateur Ni-Cd. Dans ce cas la température de référence des accumulateurs Ni-Cd est constante et égale à la température au début de la charge.

Pendant la charge, il suffit de mesurer périodiquement la température de l'accumulateur et de la comparer à la température de référence calculée à partir de la loi d'échauffement pour déceler le passage à la phase de surcharge. La charge est interrompue lorsque l'écart de température est au moins égale à une valeur, liée à la précision des appareils de mesure utilisés, qui a été programmée.

On a constaté que la variation de température des accumulateurs au passage à la phase de surcharge est reproductible et du même ordre de grandeur pour des températures ambiantes comprises entre 0°C et +50°C. La valeur de l'écart entre la température mesurée et la température de référence correspondant à la fin de la charge est de +3°C à +6°C pour les accumulateurs Ni-MH et de +10°C à +15°C pour les accumulateurs Ni-Cd. Ces valeurs tiennent compte de l'isolement thermique de la batterie et du courant de charge choisi.

Selon une variante, le procédé comprend en outre avant le début d'une charge une étape de vérification de la stabilité thermique des accumulateurs, interdisant la charge tant que l'écart entre la température mesurée et une température antérieure qui a été mémorisée est supérieur à une valeur de seuil prédéterminée.

Une analyse thermique dynamique réalisée par le chargeur précéde la charge des accumulateurs. Le chargeur procède à une série de mesures séquentielles de la température des accumulateurs et compare la température mesurée avec une température antérieure qui a été mémorisée. L'écart entre la température mesurée et la température antérieure qui a été mémorisée est comparé à une valeur de seuil préalablement déterminée et mémorisée. La mise en charge des accumulateurs est automatiquement retardée tant que la stabilisation thermique n'est pas suffisante.

Selon une forme d'exécution du procédé, une température de référence suivant la loi d'échauffement mémorisée est calculée uniquement pour les accumulateurs de type nickel-hydrure, la température au début de la charge étant prise comme température de référence pour les accumulateurs de type nickel-cadmium.

Après identification du type d'accumulateur, la compatibilité avec les accumulateurs Ni-Cd peut également être obtenue en modifiant la loi d'échauffement de la batterie en charge.

L'identification du type d'accumulateurs est effectuée par comparaison de la variation de la température mesurée au début de la charge avec une loi prédéterminée d'augmentation de la température en début de charge. Par exemple, après quelques minutes de charge le chargeur analyse le comportement thermique de la batterie d'accumulateurs par rapport à une loi de variation de température préalablement mémorisée: si la température suit cette loi il s'agit d'accumulateurs Ni-MH, dans le cas contraire ce sont des accumulateurs Ni-Cd. Mais la reconnaissance du type d'accumulateur à charger peut également être matérielle: détrompeur, action d'un contact, etc...

La présente invention a également pour objet un chargeur utilisant le procédé. Le chargeur comporte un système d'alimentation en courant, un capteur de température permettant la mesure de la température desdits accumulateurs, un dispositif de conversion des variations de température en variations de tension, une horloge permettant de mesurer le temps de charge écoulé, un dispositif de mémorisation de ladite loi d'échauffement, et un microprocesseur qui calcule d'après ladite loi d'échauffement ladite température de référence en fonction du temps de charge déjà écoulé et ladite différence avec la température desdits accumulateurs et arrête la charge lorsque cette différence est supérieure à ladite valeur prédéterminée. Ce chargeur est indépendant de la tension de la batterie, et peut utiliser différentes intensités de charge en fonction de la capacité de la batterie à charger.

Ce procédé de contrôle de la charge est compatible avec les systèmes de sécurité usuels (thermostats, fusibles électroniques réversibles type "polyswitchs", etc...) utilisés en redondance du mode de coupure principal.

D'autres caractéristiques et avantages de la présente invention apparaîtront au cours de la description et des exemples suivants, donnés bien entendu à titre illustratif et non limitatif, et dans le dessin annexé dans lequel:
- la figure 1 représente l'évolution de la tension et de la température d'une batterie de 10 accumulateurs Ni-Cd au cours d'une charge rapide à 20°C, la charge est effectuée à un courant C qui correspond à la charge complète de l'accumulateur en 1 heure,
- la figure 2 est analogue à la figure 1 pour la charge dans les mêmes conditions d'une batterie de 10 accumulateurs Ni-MH,

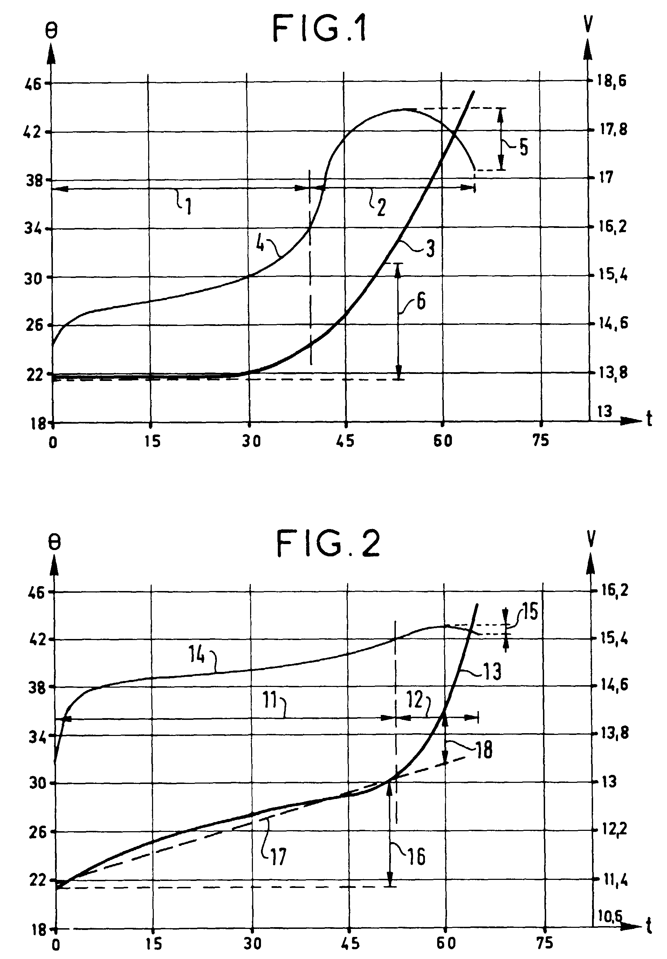

Sur les figures 1 et 2, la tension V en Volts et la température θ en degrés (°C) sont données en ordonnée, et en abcisse le temps t en minutes.

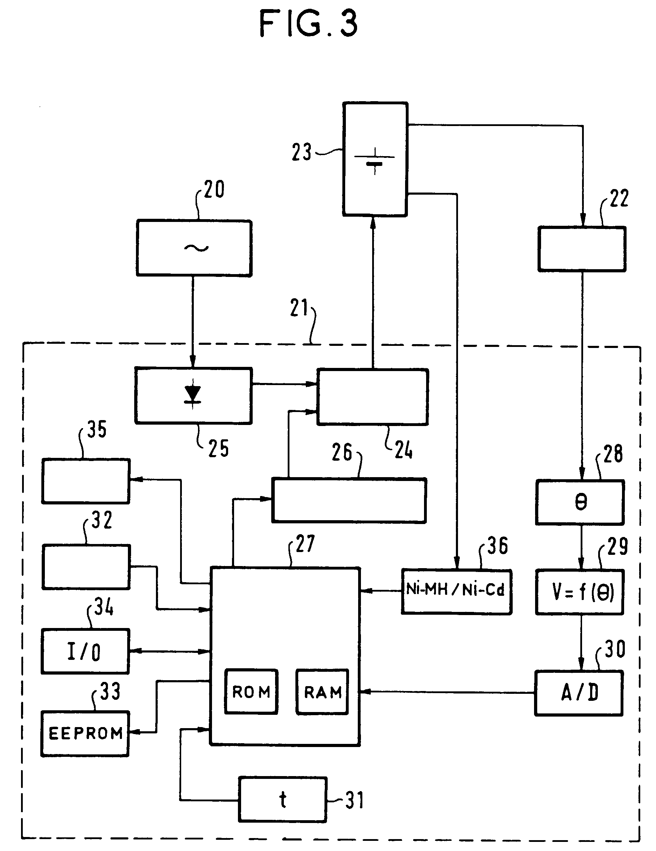

- la figure 3 montre le dispositif de charge d'une batterie d'accumulateurs au nickel comprenant une source d'alimentation, une sonde de température, le chargeur, et la batterie.

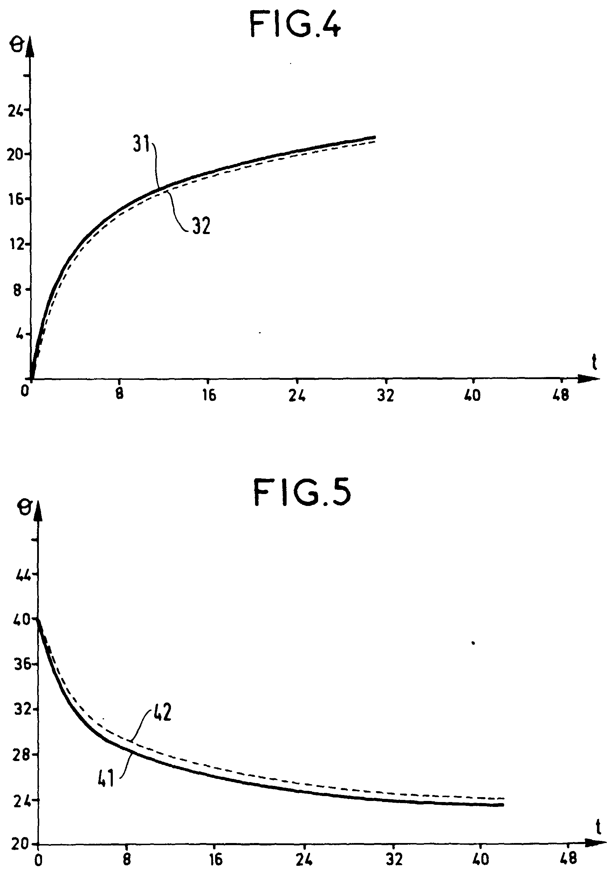

- la figure 4 donne l'évolution de la température de deux batteries de 6 accumulateurs Ni-Cd initalement à 0°C et placées à température ambiante,
- la figure 5 est analogue à la figure 4 pour une température initiale de 40°C.

Sur les figures 4, et 5, la température θ en degrés (°C) est donnée en ordonnée, et en abcisse le temps t en minutes.

La charge complète d'une batterie d'accumulateurs étanche Ni-Cd, dont la figure 1 montre l'évolution en tension (courbe 4) et température (courbe 3) pour un courant de charge de 1,2A comprend deux phases:
- la phase de charge proprement dite 1, qui correspond à l'oxydoréduction des matières actives des électrodes;
- la phase dite de surcharge 2 qui survient lorsque toute la matière active de l'électrode positive a été transformée. L'énergie électrique alors fournie à l'accumulateur produit un dégagement d'oxygène sur l'électrode positive, qui se réduit sur l'électrode négative. Cette réaction de recombinaison est exothermique comme le montre la courbe 3 de la figure 1. L'élévation 6 de la température de l'accumulateur (+Δθ) lors du passage de la phase de charge à celle de surcharge a pour effet secondaire la baisse 5 de la tension de l'accumulateur (-ΔV) comme le montre la courbe 4 de la figure 1.

Dans l'art antérieur, la charge est habituellement considérée comme complète dès lors que la variation 5 de tension (-ΔV) a atteint -10mV à -20mV par accumulateur ou que la température augmente de 0,3°C à 0,8°C par minute (+Δ θ/Δt). Outre la nécessité d'utiliser des capteurs de grande sensibilité et de faible inertie, cette méthode a l'inconvénient d'être particulièrement sensible aux perturbations thermiques affectant le milieu de charge. Par exemple, une batterie à une température inférieure à la température du milieu de charge peut subir un échauffement naturel d'amplitude suffisante pour être interprété par le chargeur comme le signal de fin de charge. De même une variation de la température ambiante T.A. pendant la charge (courant d'air, influence d'un appareil de chauffage, etc...) pourra avoir les même conséquences. Il est donc indispensable de s'assurer de la stabilité thermique de la batterie avant d'entamer sa charge.

L'utilisation du procédé selon la présente invention est illustrée par la charge d'une batterie d'accumulateurs Ni-MH. Au cours de la phase de charge 11 et de la phase de surcharge 12 d'une charge rapide, la batterie se comporte comme le montre la figure 2 où est représentée l'évolution de la température (courbe 13) et de la tension (courbe 14).

Le comportement d'une batterie d'accumulateurs Ni-MH diffère de celui d'une batterie d'accumulateurs Ni-Cd, décrit précédemment, principalement sur deux points:
- l'amplitude beaucoup moins marquée de la baisse 15 de tension (-ΔV) au passage de la phase de charge 11 à celle de surcharge 12 qui est d'environ 0mV à -5mV par accumulateur ce qui rend sa mesure difficile et sensible aux perturbations externes; de plus ce signal se réduit lorque la température s'élève ou que le courant de charge diminue, il n'apparaît plus pour une charge à 40°C à un courant inférieur ou égal à C/2;
- l'exothermicité 16 de la phase de charge 11 qui se traduit par un échauffement de la batterie dès le début de la charge (courbe 13).

Ensuite, l'échauffement +Δθ/Δt subit un accroissement au passage de la phase de charge 11 à celle de surcharge 12 qui est d'environ 0,3°C à 0,8°C par minute. Cette variation de température est insuffisante pour être détectée par les méthodes de l'art antérieur de manière fiable à des intervalles de mesure courts, ce qui correspond à la détection des variations de température de quelques dixièmes de degré.

Selon la présente invention, au cours d'une première charge, l'évolution de la température est enregistrée et la loi d'échauffement 17 du modèle de batterie considéré est calculée et mémorisée.

Avant de procéder à la charge du même modèle de batterie, on s'assure de la stabilité thermique de la batterie en mesurant à intervalles réguliers sa température et en la comparant à une température précédente prise comme référence. La charge de la batterie n'est autorisée que si la différence entre les deux température est inférieure à une valeur de seuil, ce qui signifie que la batterie est en équilibre thermique avec le milieu ambiant.

Pendant la charge de la batterie, la température de la batterie d'accumulateurs est mesurée périodiquement et on la compare à la température de référence pour une durée de charge identique calculée à partir de la loi d'échauffement 17 qui a été précédemment mémorisée. Lorsque la différence entre la température de la batterie et la température de référence atteint une valeur prédéterminée 18, ce qui signifie que la batterie est entrée dans la phase de surcharge 12, la charge est arrêtée. La valeur prédéterminée 18 est fixée de telle sorte que, compte tenu de la précision des appareil de mesure utilisés, la phase de surcharge soit la plus brève possible.

La figure 3 représente l'ensemble du dispositif de charge de la batterie comprenant une source d'alimentation électrique 20, un chargeur 21, une sonde de température 22, et une batterie 23 d'accumulateurs Ni-Cd ou Ni-MH.

La batterie 23 est chargée à courant constant par l'intermédiaire d'un régulateur de courant 24. Dans le cas où elle provient du secteur, la source d'alimentation 20 doit passer par un transformateur et un redresseur filtré 25. Dès la fin de la charge à régime élevé, un commutateur 26 assure le passage en courant d'entretien. Un microprocesseur 27 associé à un capteur de température 28 muni de la sonde de température 22 effectuent une mesure de température de la batterie 23 à une fréquence d'échantillonnage déterminée. Un montage électronique 29 traduit les variations de température en variations de tension, ces valeurs analogiques sont à leur tour converties en valeurs numériques par un convertisseur 30. Le microprocesseur 27, équipé de mémoires de type ROM (Read Only Memory) et RAM (Random Access Memory), détermine par traitement logiciel de la loi d'échauffement de la batterie au cours de la charge, d'abord la température de la batterie puis l'écart entre la température mesurée et la température de référence calculée d'après la loi d'échauffement selon le temps de charge écoulé mesuré par l'horloge 31. Les paramètres de la loi d'échauffement sont soit configurables par des interrupteurs 32 type "switchs", soit mémorisés dans une mémoire 33 type EEPROM (Electrically Erasable PROgrammable Memory) par l'interface d'entrée/sortie vers l'extérieur 34. Le résultat apparait sur un afficheur 35.

### EXEMPLE 1

Afin de pouvoir suivre de manière fiable l'échauffement d'une batterie d'accumulateur, il est nécessaire de s'assurer de l'équilibre thermique de la batterie vis à vis du milieu ambiant. Les courbes d'échauffement et de refroidissement de 2 batteries de 6 accumulateurs Ni-Cd de format prismatique (largeur 16,4mm, épaisseur 5,6mm), l'une de modèle GP4 (hauteur: 48mm) et l'autre de modèle GP6 (hauteur: 67mm), sont représentées sur les figures 4 et 5. Sur la figure 4 a été enregistrée la température des batteries GP4 (courbe 31) et GP6 (courbe 32) initialement à 0°C et placées à la température ambiante. La figure 5 montre le refroidissement des batteries GP4 (courbe 41) et GP6 (courbe 42) initialement à 40°C et placées à la température ambiante.

Pour chaque batterie, la température de rang N est mesurée toutes les 15 secondes, et comparée à la température de rang N-7 mesurée 105 secondes auparavant. La charge ne pourra débuter que lorsque la différence entre ces deux températures sera inférieure à 0,35°C, ce qui correspond à une variation de température inférieure à 0,2°C/mn. La valeur de seuil est prédeterminée en fonction de la précision des appareils de la chaîne de mesure utilisée, et en particulier du microprocesseur 27.

### EXEMPLE 2

Selon la présente invention, on peut par exemple contrôler la charge d'une batterie 23 de 10 accumulateurs cylindriques étanches Ni-MH de format 4/5A (hauteur: 42mm, diamètre: 16,6mm) de la manière suivante.

Le chargeur 21 réalise des mesures périodiques de la température de la batterie 23 espacées de 15 secondes. Chaque température de rang N obtenue est comparée à la température de rang N-7 mémorisée précédemment. Tant que l'écart entre ces deux valeurs est supérieur à 0,35°C, la charge de la batterie 23 ne peut pas commencer. Dès que cette valeur de seuil est atteinte, la batterie 23 est mise en charge à un courant de 1,4A qui correspond à une charge complète en 1 heure.

Au cours d'une première charge, le chargeur 21 calcule l'échauffement de la batterie 23 qui répond à une équation mathématique de la forme: θ(t) = θₒ + f(t) où θₒ est la valeur de la température au commencement de la charge et f(t) représente la loi mathématique d'augmentation de la température en fonction du temps durant la phase de charge 11. La loi d'échauffement ainsi déterminée est mémorisée dans le chargeur 21 et lui permet à tout moment de calculer une valeur de référence de la température θᵣ qui ne dépend que de la durée de charge déjà effectuée.

Au cours des charges suivantes, le chargeur réalise à un intervalle de temps de l'ordre de quelques secondes à une minute des mesures de la température réelle θₘ à l'aide d'une sonde de température 22 plongée dans la batterie 23. Chaque mesure est alors comparée à la température de référence θᵣ correspondante. Le signal de fin de charge est obtenu lorsque l'écart 18 +Δ(θₘ-θᵣ) entre la température mesurée θₘ et la température de référence θᵣ calculée par le chargeur 21, est positif et supérieur à une valeur fixée. Le tableau suivant donne les valeurs à la fin de la charge de la variation de tension -ΔV, de l'échauffement +Δθ/Δt, et de l'écart à la loi d'échauffement +Δ(θₘ-θᵣ) pour trois températures ambiantes T.A. du milieu de charge:

| T.A. (°C) | -ΔV (mV) | +Δθ/Δt (°C/mn) | +Δ(θₘ-θᵣ) (°C) |
|---|---|---|---|
| 0 | 0 | 0,8 | 6 |
| +20 | 0 | 0,9 | 5 |
| +40 | 0 | 0,9 | 6 |

Il est clair que le paramètre +Δ(θₘ-θᵣ) est celui qui présente la variation d'amplitude la plus importante et donc qui permet d'assurer une meilleure fiabilité de la détection et une mise en oeuvre plus facile du chargeur.

## Revendications

1. Procédé de contrôle de la charge rapide d'accumulateurs étanches au nickel de type nickel-hydrure et nickel-cadmium, éventuellement associés en batterie, lesdits accumulateurs ayant été identifiés, comportant les étapes suivantes pour déterminer la fin de la charge:
- une loi d'échauffement desdits accumulateurs en fonction du temps de charge avant la phase de surcharge pour un mode de charge donné est précédemment déterminée et mémorisée,
- la température desdits accumulateurs est mesurée,
- une température de référence est calculée en fonction du temps de charge déjà écoulé suivant ladite loi d'échauffement,
- la charge desdits accumulateurs est arrêtée lorsque la différence entre ladite température des accumulateurs et ladite température de référence est supérieure à une valeur prédéterminée.

2. Procédé selon la revendication 1, caractérisé par le fait que ladite loi d'échauffement est déterminée de la manière suivante:
- l'évolution de la température desdits accumulateurs au cours d'une charge est mesurée et enregistrée,
- l'expression mathématique de variation de la température en fonction du temps de charge est établie,
- la loi d'échauffement desdits accumulateurs pendant ladite charge est mémorisée.

3. Procédé selon l'une des revendications 1 et 2, caractérisé par le fait qu'il comprend en outre avant le début d'une charge une étape de vérification de la stabilité thermique desdits accumulateurs, interdisant la charge tant que l'écart entre la température mesurée et une température antérieure qui a été mémorisée est supérieur à une valeur de seuil prédéterminée.

4. Procédé selon l'une des revendications précédentes caractérisé par le fait qu'une température de référence suivant ladite loi d'échauffement mémorisée est calculée uniquement pour les accumulateurs de type nickel-hydrure, la température au début de la charge étant prise comme température de référence pour les accumulateurs de type nickel-cadmium.

5. Procédé selon l'une des revendications précédentes, caractérisé par le fait que l'identification desdits accumulateurs est effectuée par comparaison de la variation de la température mesurée au début de la charge avec une loi prédéterminée d'augmentation de la température en début de charge.

6. Chargeur utilisant le procédé selon l'une des revendications précédentes, comportant un système d'alimentation en courant (20, 24, 25), un capteur de température (28) permettant la mesure de la température desdits accumulateurs, un dispositif (29) de conversion des variations de température en variations de tension, une horloge (31) permettant de mesurer le temps de charge écoulé, un dispositif (32, 33) de mémorisation de ladite loi d'échauffement, et un microprocesseur (27) qui calcule d'après ladite loi d'échauffement ladite température de référence en fonction du temps de charge déjà écoulé et ladite différence avec la température desdits accumulateurs et arrête la charge lorsque cette différence est supérieure à ladite valeur prédéterminée.

## Patentansprüche

1. Verfahren zur Kontrolle der Schnelladung säuredichter Nickel-Akkumulatoren des Nickel-Hydrid- und Nickel-Cadmium-Typs, die gegebenenfalls in einer Batterie zusammengeschlossen sind, das nach der Identifizierung der Akkumulatoren die folgenden Schritte zur Bestimmung des Endes des Ladevorgangs umfaßt:
- es wird zuvor ein Gesetz der Erwärmung der Akkumulatoren in Abhängigkeit von der Ladezeit vor der Überladungsphase für einen bestimmten Lademodus ermittelt und gespeichert,
- die Temperatur der Akkumulatoren wird gemessen,
- nach dem Erwärmungsgesetz wird in Abhängigkeit von der bereits verstrichenen Ladezeit eine Bezugstemperatur berechnet,
- das Laden der Akkumulatoren wird unterbrochen, wenn die Differenz zwischen der Temperatur der Akkumulatoren und der Bezugstemperatur größer als ein vorbestimmter Wert ist.

2. Verfahren nach Anspruch 1, dadurch gekennzeichnet, daß das Erwärmungsgesetz folgendermaßen ermittelt wird:
- es wird die Entwicklung der Temperatur der Akkumulatoren während eines Ladevorgangs gemessen und aufgezeichnet,
- es wird der mathematische Ausdruck für die Temperaturänderung in Abhängigkeit von der Ladezeit bestimmt,
- das Gesetz der Erwärmung der Akkumulatoren während des Ladens wird gespeichert.

3. Verfahren nach einem der Ansprüche 1 und 2, dadurch gekennzeichnet, daß es außerdem vor Beginn eines Ladevorgangs einen Schritt der Prüfung der thermischen Stabilität der Akkumulatoren umfaßt, der das Laden verbietet, solange die Differenz zwischen der gemessenen Temperatur und einer früheren Temperatur, die gespeichert wurde, größer als ein vorbestimmter Schwellenwert ist.

4. Verfahren nach einem der vorhergehenden Ansprüche, dadurch gekennzeichnet, daß nur für die Akkumulatoren des Nickel-Hydrid-Typs eine Bezugstemperatur nach dem gespeicherten Erwärmungsgesetz berechnet wird, wobei als Bezugstemperatur für die Nickel-Cadmium-Akkumulatoren die Temperatur zu Beginn des Ladevorgangs genommen wird.

5. Verfahren nach einem der vorhergehenden Ansprüche, dadurch gekennzeichnet, daß die Identifizierung der Akkumulatoren durch Vergleich der zu Beginn des Ladevorgangs gemessenen Temperaturänderung mit einem vorher ermittelten Gesetz des Temperaturanstiegs zu Beginn des Ladevorgangs erfolgt.

6. Ladegerät, bei dem das Verfahren nach einem der vorhergehenden Ansprüche zur Anwendung kommt und das ein Stromversorgungssystem (20, 24, 25), einen Temperaturaufnehmer (28), der die Messung der Temperatur der Akkumulatoren gestattet, eine Vorrichtung (29) zur Umwandlung der Temperaturänderungen in Spannungsänderungen, einen Zeitgeber (31), der die Messung der verstrichenen Ladezeit gestattet, eine Vorrichtung (32, 33) zum Speichern des Erwärmungsgesetzes und einen Mikroprozessor (27) enthält, der nach diesem Erwärmungsgesetz die Bezugstemperatur in Abhängigkeit von der bereits verstrichenen Ladezeit sowie die Differenz mit der Temperatur der Akkumulatoren berechnet und den Ladevorgang unterbricht, wenn diese Differenz größer als der vorbestimmte Wert ist.

## Claims

1. A method of monitoring rapid charging of sealed nickel storage cells of the nickel-hydride type and of the nickel-cadmium type, said cells optionally being associated in a battery, and said cells being identified, the method including the following steps in order to determine the end of charging:
a relationship for the heating of said cells as a function of charging time before the overcharging stage for a given charging mode is determined and stored;
the temperature of said cells is measured;
a reference temperature is calculated on the basis of said heating relationship and as a function of the charging time that has already elapsed; and
the charging of said cells is stopped when the difference between said temperature of said cells and said reference temperature exceeds a predetermined value.

2. A method according to claim 1, characterized by the fact that said heating relationship is determined as follows:
the change in the temperature of said cells during a charging operation is measured and recorded;
a mathematical expression is established giving temperature as a function of charging time; and
the heating relationship for said cells during said charging operation is stored.

3. A method according to claim 1 or 2, characterized by the fact that prior to the beginning of charging it further includes a step consisting in verifying temperature stability of said cells, with charging being inhibited so long as the difference between a measured temperature and a stored earlier measured temperature is greater than a predetermined threshold value.

4. A method according to any preceding claim, characterized by the fact that a reference temperature satisfying said stored heating relationship is calculated for nickel-hydride type cells only, the temperature at the beginning of charging being taken as the reference temperature for nickel-cadmium type cells.

5. A method according to any preceding claim, characterized by the fact that the type of said cells is identified by comparing the change in temperature as measured at the beginning of charging with a predetermined relationship for temperature increase at the beginning of charging.

6. A charger using the method according to any preceding claim, including an electricity power supply system (20, 24, 25), a temperature sensor (28) allowing the temperature of said storage cells to be measured, means (29) for converting temperature variations into voltage variations, a clock (31) allowing the charging time that has elapsed to be measured, means (32, 33) for storing said heating relationship, and a microprocessor (27) which calculates, from said heating relationship, said reference temperature as a function of the charging time that has already elapsed, and said difference relative to the temperature of said cells, and stops charging when said difference exceeds said predetermined value.
